# EUROPÄISCHE PATENTSCHRIFT

(11) **EP 2 015 964 B1**
(45) Veröffentlichungstag und Bekanntmachung des Hinweises auf die Patenterteilung: **25.01.2012**
(21) Anmeldenummer: 07728888.4
(22) Anmeldetag: 08.05.2007
(51) Int. Cl.: B60R 3/02, B61D 23/02

(54) **TRITTSTUFE MIT TRITTKONTAKTMATTE FÜR EIN SCHIENENFAHRZEUG**
STEP WITH A STEP CONTACT MAT FOR A RAIL VEHICLE
MARCHE POURVUE D'UN TAPIS DE CONTACT POUR UN VEHICULE FERROVIAIRE

(30) Priorität: 11.05.2006 DE 102006022130
(43) Veröffentlichungstag der Anmeldung: 21.01.2009
(73) Patentinhaber: SIEMENS AKTIENGESELLSCHAFT, 80333 München (DE)
(72) Erfinder: EBERT, Matthias, 15711 Königs Wusterhausen (DE); KRÜGER, Axel, 47799 Krefeld (DE)
(86) Internationale Anmeldenummer: PCT/EP2007/054435
(87) Internationale Veröffentlichungsnummer: WO 2007/131913

(56) Entgegenhaltungen:
- EP-A1- 1 464 786
- EP-A1- 1 470 959
- DE-A1- 10 043 561
- DE-A1- 10 245 014
- US-A- 3 924 545

## Beschreibung

Die Erfindung bezieht sich auf eine Trittstufen-Anordnung für ein Schienenfahrzeug, mit einer Trittstufe und einer Ausfahrsteuer-/regeleinheit, wobei die Trittstufe aus einem zugehörigen Gehäuse ausfahrbar und mit einer Trittkontaktmatte ausgestattet ist, wobei die Trittkontaktmatte(2)mit Drucksensoren ausgestattet ist, welche bei einer Beaufschlagung mit Druck Signale aussenden, welche in die Ausfahrsteuer-/regeleinheit der Trittstufe eingehen. Solche ausfahrbaren Trittstufen sind bei Schienenfahrzeugen sehr gebräuchlich und dienen dazu, einen etwaigen Abstand zwischen einer Trittkante im Ein- /Ausstiegsbereich eines Schienenfahrzeuges und einer Bahnsteigoberkante wenigstens teilweise zu überbrücken.

Aus der EP 1 464 786 A1 ist eine Schaltleiste bekannt, bei der nahezu parallel angeordnete elektrische Leiter vorgesehen sind, welche bei Annäherung eines Gegenstands an die Leiter eine Auslösung eines Schaltvorgangs bewirken.

Eine solche Trittstufe für ein Schienenfahrzeug ist beispielsweise aus der US-A-3 924 545 bekannt. Das dort beschriebene Schienenfahrzeug ist mit einem treppenartigen Einstieg ausgestattet, wobei jede Trittstufe mit einer Trittkontaktmatte ausgestattet ist.

Die Trittstufen sind derart gesteuert, dass sie nur dann in ihr zugehöriges Gehäuse, das am Schienenfahrzeug untergebracht ist, eingefahren werden, wenn sichergestellt ist, dass keine Person sich mehr auf der Trittstufe befindet. Das Vorhandensein einer Person auf der Trittstufe, genauer gesagt ein Betreten der Trittstufe, wird über die Trittkontaktmatte erfasst, die eine Druckbeaufschlagung feststellt und ein geeignetes Signal an die Ausfahrsteuer- /regeleinheit der Trittstufe aussendet. Dabei wird im Stand der Technik die gesamte Trittkontaktmatte, was eine Druckbeaufschlagung angeht, als Einheit betrachtet.

Bei solchen einfahrbaren Trittstufen gibt es die Problematik, dass Gegenstände geringer Größe beim Einfahren der Trittstufe zwischen eine druckempfindliche Schicht der Druckkontaktmatte und eine äußere Umhüllung bzw. das Gehäuse der Trittstufe geraten, so dass damit eine nicht beabsichtigte Kontaktmeldung ausgelöst wird. In einem solchen Fall wird die Trittstufe nicht weiter eingefahren, da irrtümlicher Weise die Ausfahrsteuer-/regeleinheit von einer Situation ausgeht, bei der eine Person noch die Trittstufe benutzen möchte. In einem solchen Fall muss ein Fahrbetrieb des Schienenfahrzeugs unterbunden sein.

Ausgehend hiervon liegt der Erfindung die Aufgabe zugrunde, eine Trittstufe der eingangs genannten Art derart weiterzuentwickeln, dass fehlerhafte Kontaktmeldungen durch die Trittkontaktmatte von ihrer Anzahl her vermindert werden.

Diese Aufgabe wird dadurch gelöst, dass die Trittkontaktmatte in eine Mehrzahl Trittkontaktsegmente aufgeteilt ist und jedes Trittkontaktsegment bei Beaufschlagung mit Druck ein Signal ausgibt, dass der Ausfahrsteuer-/regeleinheit der Trittstufe zugeleitet ist, dass in Richtung einer Ausfahrbewegung der Trittstufe die Trittkontaktsegmente streifenförmig hintereinander angeordnet sind und entweder die Ausfahrsteuer-/regeleinheit derart ausgelegt ist, dass Signale von Trittkontaktsegmenten, die sich innerhalb des Gehäuses befinden, ignoriert werden oder in das Gehäuse eingefahrene Trittkontaktsegmente von der Ausfahrsteuer-/regeleinheit deaktiviert sind.

Auf diese Weise wird die Möglichkeit gegeben, über die einkommenden Signale von den Trittkontaktsegmenten Informationen darüber zu gewinnen, ob tatsächlich gerade eine Person die Trittkontaktmatte betritt oder lediglich kleinere Objekte oder Gegenstände beim Einfahren der Trittstufe in ihr Gehäuse ein Kontaktsignal auslösen.

In Richtung einer Ausfahrbewegung der Trittstufe sind die Trittsegmente streifenförmig hintereinander angeordnet. Dies bedeutet, dass die jeweils von den Trittkontaktsegmenten ausgesandten Signale unter Einbeziehung ihrer Herkunft ausgewertet werden können. Dies bedeutet, dass die Ausfahrsteuer-/regeleinheit derart ausgelegt ist, dass Signale von Trittkontaktsegmenten, die sich innerhalb des Gehäuses befinden, ignoriert werden. Zur Unterscheidung der Kontaktsignale von den einzelnen Trittkontaktsegmenten sind beispielsweise etwas variierende Signalformen möglich.

Alternativ ist auch eine Positionserkennung vorgesehen, die eine Ausfahrposition der Trittstufe wiedergebende Signale an die Ausfahrsteuer-/regeleinheit aussendet.

Statt, wie im vorhergehenden Ausführungsbeispiel erläutert, die Kontaktsignale von Trittkontaktsegmenten innerhalb des Gehäuses zu ignorieren, können die in das Gehäuse eingefahrenen Trittkontaktsegmente auch von der Ausfahrsteuer-/regeleinheit aus deaktiviert werden, so dass sie keine weiteren Kontaktsignale mehr aussenden können.

Die oben angesprochene Positionserkennung kann auch außerhalb der beweglichen Baugruppe, welche die Trittstufe bildet, angeordnet sein.

Alternativ dazu kann die bewegliche Baugruppe eine Positionserkennung und die Ausfahrsteuer-/regeleinheit umfassen, die ein eine Kontaktlage bei einem Trittkontaktsegment wiedergebendes Signal an eine Zentralsteuerung ausgibt.

Wenn die Ausfahrsteuer-/regeleinheit in die Trittstufe integriert ist, kann das Signal von der Ausfahrsteuer-/regeleinheit drahtlos an die Zentralsteuerung übermittelt werden. Alternativ ist auch eine drahtgebundene Signalübermittlung möglich.

Bei einer weiteren Ausführungsform der Erfindung kann die bewegliche Baugruppe den jeweiligen Trittkontaktsegmenten zugeordnete Positionsschalter aufweisen, die derart ausgebildet sind, dass die Trittkontaktsegmente, die in das Gehäuse eingefahren sind, wirkungslos schaltbar sind. Dabei wirken die Positionsschalter mit der Positionserkennung zusammen und eine jeweilige Positionsschalterbetätigung erfolgt, wenn die Positionserkennung für ein bestimmtes Trittkontaktsegment eine Position innerhalb des Gehäuses festgestellt hat.

Die kontaktwiedergebenden Signale von den Trittkontaktsegmenten außerhalb des Gehäuses können in einer ersten Ausführungsform zu einem Gesamtsignal zusammengefasst und der Ausfahrsteuer-/regeleinheit zugeleitet werden. In diesem Fall wird über sämtliche Trittkontaktsegmente integriert. Alternativ dazu können die kontaktwiedergebenden Signale von den Trittkontaktsegmenten außerhalb des Gehäuses der Ausfahrsteuer-/regeleinheit einzeln zugeleitet und dort ausgewertet werden.

Ausführungsbeispiele der Erfindung werden nachfolgend anhand der Zeichnungen noch näher erläutert, wobei funktionsgleiche Komponenten mit denselben Bezugsziffern bezeichnet sind. Es zeigen:
- Figur 1: eine schematische Ansicht einer Trittstufe für ein Schienenfahrzeug mit zugehöriger Ausfahrsteuer-/regeleinheit gemäß einer ersten Ausführungsform,
- Figur 2: eine schematische Ansicht einer Trittstufe für ein Schienenfahrzeug mit zugehöriger Ausfahrsteuer-/regeleinheit gemäß einer zweiten Ausführungsform,
- Figur 3: eine schematische Ansicht einer Trittstufe für ein Schienenfahrzeug mit zugehöriger Ausfahrsteuer-/regeleinheit gemäß einer dritten Ausführungsform,
- Figur 4: eine schematische Ansicht einer Trittstufe für ein Schienenfahrzeug mit zugehöriger Ausfahrsteuer-/regeleinheit gemäß einer vierten Ausführungsform,

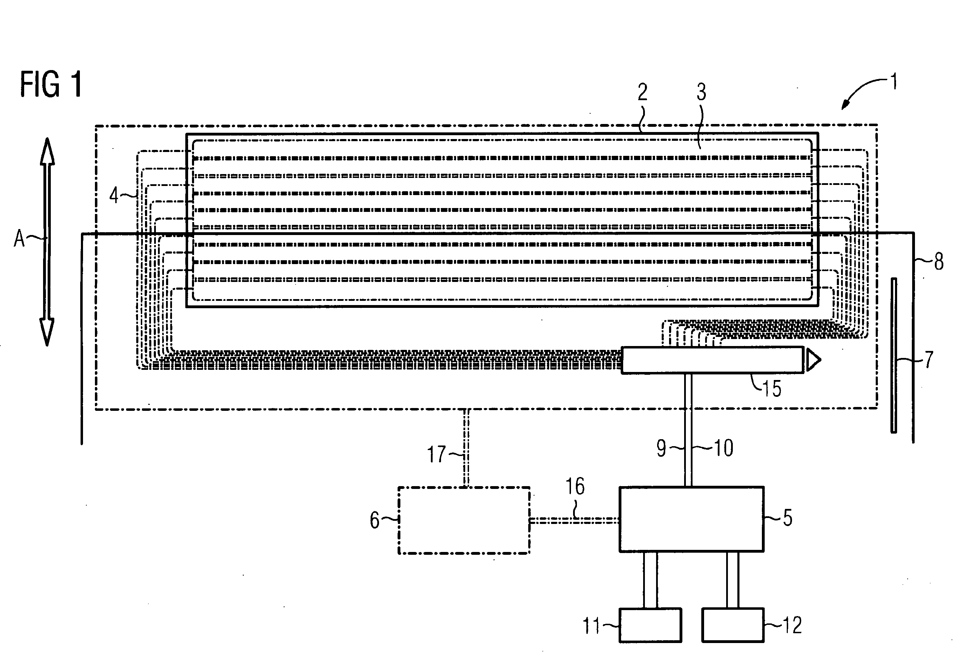

In Figur 1 ist eine bewegliche Trittstufe 1 für einen Einstiegs-/Ausstiegsbereich eines Schienenfahrzeuges dargestellt. Die Trittstufe 1 ist über ihren gesamten Trittbereich mit einer Trittkontaktmatte 2 versehen, die in einer Bewegungsrichtung A in hintereinander liegende, streifenförmige Trittkontaktsegmente 3 aufgeteilt ist, von denen aus Gründen der Übersichtlichkeit in der Figur 1 lediglich ein Trittkontaktsegment mit einer Bezugsziffer bezeichnet ist. Die Trittkontaktsegmente 3 erfassen ihre Beaufschlagung mit Druck und senden über eine zugehörige Leitung 4 kontaktwiedergebende Signale aus.

Die einzelnen kontaktwiedergebenden Signale der Trittkontaktsegmente 3 werden einer Ausfahrsteuer-/regeleinheit 5 zugeleitet, die wiederum einen Antrieb 6 für ein Ein-/Ausfahren der Trittstufe 1 steuert. In der Ausfahrsteuer-/regeleinheit 5 werden die einzelnen kontaktwiedergebenden Signale der Trittkontaktsegmente 3 ausgewertet und in eine Antriebssteuerung umgesetzt.

Dabei erfolgt eine Signalausgabe 12 an eine hier nicht näher dargestellte Türsteuerung und/oder eine Fahrzeugsteuerung. Beispielsweise übergeordnete Signale zum Auslösen eines Ausfahrens oder Einfahrens der Trittstufe 1 werden von der Türsteuerung und/oder der Fahrzeugsteuerung generiert und der Ausfahrsteuer-/regeleinheit 5 zugeleitet. Der darauf folgende Ausfahr- oder Einfahrvorgang wird dann automatisch von der Ausfahrsteuer-/regeleinheit 5 durchgeführt, und zwar durch geeignete Steuerung des Antriebs 6.

Die Signalausgabe 12 kann darüber hinaus zum Melden einer ordnungsgemäßen Funktion der Trittstufe 1, von Fehlerereignissen oder allgemein von Zuständen, wenn die Trittstufe 1 Einfluss auf das Fahrzeugverhalten nehmen soll, verwendet werden. Beispielsweise darf sich das Fahrzeug bei ausgefahrener Trittstufe 1 trotz eines von einem Fahrzeugführer gegebenen Fahrbefehls nicht in Bewegung setzen.

Darüber hinaus kann die Signalausgabe 12 zur Ansteuerung von optischen oder akustischen Meldeeinrichtungen, welche der Trittstufe 1 zugeordnet sind, verwendet werden. Auch ist eine Kommunikation mit geeignet ausgerüsteten PCs bzw. Laptops zum Auslesen interner Fehlerspeicher oder zum Überspielen einer aktualisierten Software auf die Ausfahrsteuer-/regeleinheit 5 möglich. Außerdem kann die Signalausgabe 12 auch zum externen Speichern statistischer Angaben zur Benutzung der Trittstufe 1 verwendet werden.

Innerhalb der beweglichen Trittstufe 1 ist ein Positionserkennungsmodul 15 für eine Ausfahrlage der Trittstufe 1 vorgesehen, das Bestandteil jeweiliger Messkreise für die einzelnen Trittkontaktsegmente 3 ist.

Figur 1 zeigt die Trittstufe 1 in teilweise ausgefahrenem Zustand, wobei die in Figur 1 unteren drei Trittkontaktsegmente 3 bereits in ein Gehäuse 8 der Trittstufe 1 eingefahren sind. Dabei gestattet die Positionserkennung die Feststellung, welche Trittsegmente 3 bereits innerhalb des Gehäuses 8 liegen. Wenn nun von einem der bereits im Gehäuse 8 befindlichen Kontaktsegmente 3 ein kontaktwiedergebendes Signal ausgesandt wird, so kann dieses Signal nicht darauf beruhen, dass eine Person die Trittstufe 1 betreten hat. Vielmehr ist hier der Fall gegeben, dass ein passendes Objekt oder ein Gegenstand geringer Größe beim Einfahren der Trittstufe 1 zwischen das betreffende Trittkontaktsegment 3 und das Gehäuse 8 geraten ist und somit den Kontakt ausgelöst hat.

Auf dieser Basis wird der Ausfahrsteuer-/regeleinheit 5 auch von der Positionserkennung Information darüber zugeleitet, welche der Trittkontaktsegmente 3 bereits in das Gehäuse 8 eingefahren sind. In diesem Fall kann die Ausfahrsteuer-/regeleinheit 5 kontaktwiedergebende Signale der im Gehäuse liegenden Trittkontaktsegmente 3 ignorieren und beispielsweise die Trittstufe 1 vollständig in das Gehäuse 8 einfahren, und zwar durch entsprechende Steuerung des Antriebs 6 für die Trittstufe 1 über eine Leitung 16. Der Antrieb 6 ist über eine mechanische Verbindung 17 mit der Trittstufe 1 verbunden. Leitung 9 überträgt das durch das Positionserkennungsmodul 15 erzeugte Summensignal , während eine Leitung 10 zur Übermittlung von Positionsinformationssignalen von dem Positionserkennungsmodul 15 an die Ausfahrsteuer-/regeleinheit 5 dient.

Die Positionserkennung setzt sich zusammen aus einer fahrzeugseitigen Komponente 7 und einem Positionserkennungsmodul 15, das innerhalb der beweglichen Trittstufe 1 untergebracht ist und die Aufgabe hat, die von den einzelnen druckempfindlichen Trittkontaktsegmenten 3 gelieferten Signale in der Hinsicht zu bewerten, ob sich das jeweilige Trittkontaktsegment 3 bereits innerhalb des Gehäuses 8 befindet, daraus folgend blendet das Positionserkennungsmodul Signale von Trittkontaktsegmenten 3, die bereits innerhalb des Gehäuses 8 liegen, aus. Das Summensignal aus den verbleibenden Signalen von den Trittkontaktsegmenten 3 der nicht im Gehäuse befindlichen Trittkontaktsegmente 3 wird an die Ausfahrsteuer-/regeleinheit 5 und damit an die Trittstufensteuerung übergeben.

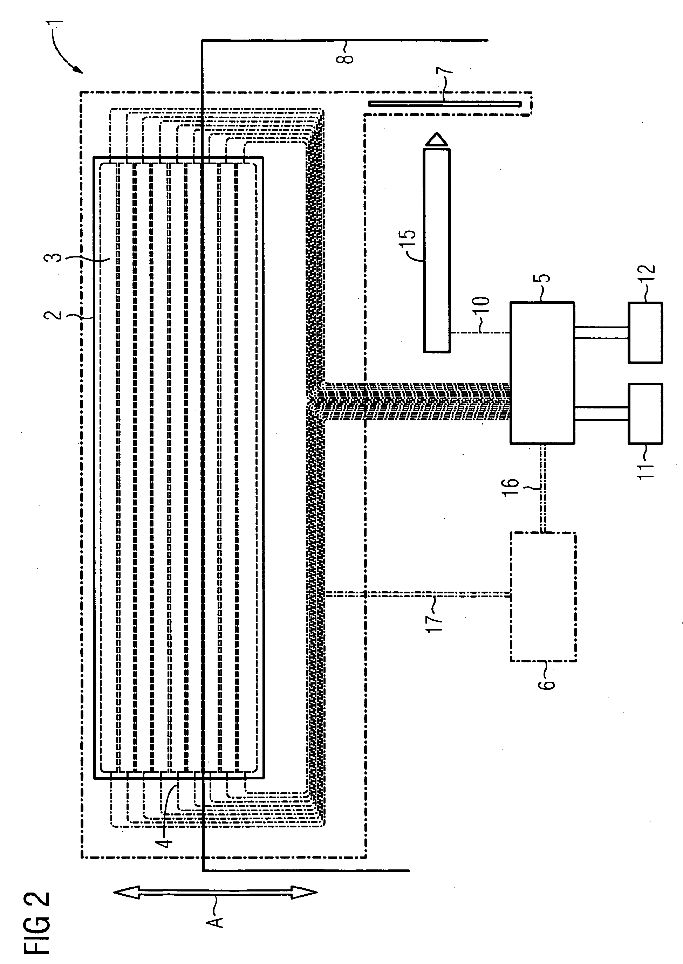

Ein Vorteil dieser Ausführungsform ist es, dass die Anzahl der notwendigen Signalleitungen zwischen der beweglichen Trittstufe 1 und deren unbeweglichem Gehäuse 8 reduziert wird. Alternativ kann die Art der Vorverarbeitung der Kontakt wiedergebenden Signale von dem Trittkontaktsegmenten 3 auch außerhalb der Trittstufe 1 ausgeführt werden, wie es in Figur 2 dargestellt ist. Dazu müssen allerdings sämtliche Signalleitungen von den Trittkontaktsegmenten 3 herausgeführt werden.

Zur Energieversorgung dient eine Spannungsversorgung 11, wobei Versorgungsleitungen ausschließlich zwischen der Spannungsversorgung 11 und der Ausfahrsteuer-/regeleinheit 5 zeichnerisch dargestellt sind. Eine alternative Ausführungsform der Trittstufe 1 mit zugehöriger Ausfahrsteuer-/regeleinheit 5 und Antrieb 6 ergibt sich aus der Figur 2. Die dort veranschaulichte Ausführungsform unterscheidet sich von derjenigen nach Figur 1 ausschließlich durch die Funktionsweise der Positionserkennung. Während das Positionserkennungsmodul 15 bei der Ausführungsform nach Figur 1 in eine bewegliche Baugruppe, die die Trittstufe 1 bildet, integriert ist, liegt das Positionserkennungsmodul 15 nach der Ausführungsform von Figur 2 außerhalb der Trittstufe 1, während die Komponente 7 an der Trittstufe 1 vorgesehen ist. Im Übrigen ist die Funktionsweise der beiden Ausführungsformen identisch.

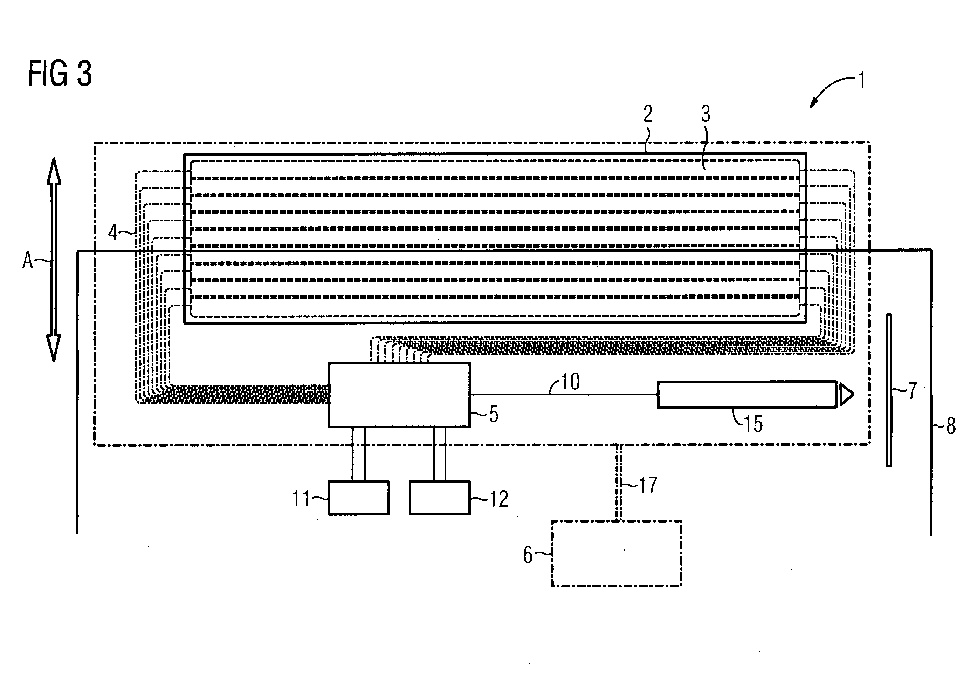

Anhand der Figur 3 wird nunmehr eine dritte Ausführungsform der Trittstufe 1 erläutert. Im Gegensatz zu den beiden vorher beschriebenen Ausführungsformen ist bei der Ausführungsform nach Figur 3 die Ausfahrsteuer-/regeleinheit 5 nicht außerhalb der Trittstufe 1 angeordnet sondern in die Trittstufe 1 integriert. Das Positionserkennungsmodul 15 entspricht in seiner Funktionsweise derjenigen des Positionserkennungsmoduls 15 der ersten Ausführungsform. Dabei können (gilt für alle Ausführungsformen) die Spannungsversorgung 11 und die Signalausgabe 12 der Ausfahrsteuer-/regeleinheit 5 drahtlos oder auch drahtgebunden erfolgen. Die Signalausgabe 12 gelangt an eine hier nicht dargestellte übergeordnete Steuerung, welche den Antrieb 6 für die Trittstufe 1 in ihrem Betrieb steuert.

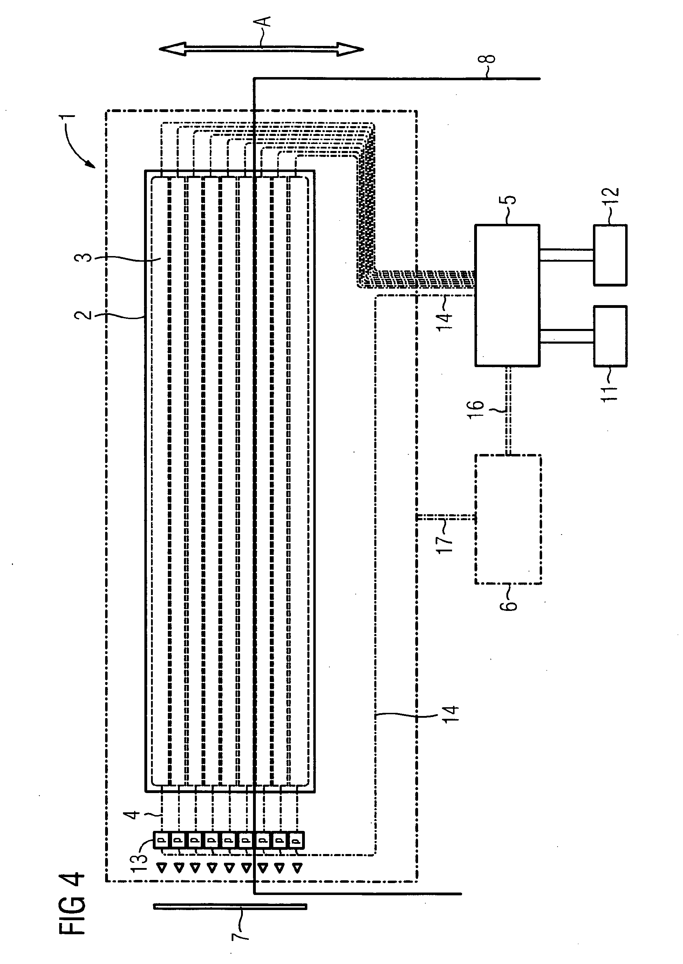

Bei der vierten Ausführungsform, die anhand der Figur 4 erläutert ist, ist jedem Trittkontaktsegment 3 ein mechanisch oder induktiv geschalteter Positionsschalter 13 zugeordnet. Jeder der hardwaremäßig implementierten Positionsschalter 13 wird über die Komponente 7 gesteuert, die außerhalb der Trittstufe 1 liegt.

Im Hinblick auf die Funktionsweisen der Positionserkennungen, die in den Figuren dargestellt sind, lässt sich folgendes feststellen: in den Figuren sind die Positionserkennungsmodule 15 als Sensoren ausgebildet, welche von einem gegenüberliegenden Material als Komponente 7 der Positionserkennung beeinflusst werden. Dieses Material ist in den Figuren ähnlich einem Stab dargestellt. Dabei sind verschiedene, bekannte Wirkprinzipien (beispielsweise optisch oder induktiv) möglich. Bei alternativen Positionserkennungsmethoden kann ebenso eine von dem Antrieb 6 definierte mechanische Vorschubbewegung beispielsweise inkremental ausgewertet werden. Andere Positionsbestimmungsmethoden sind ebenso möglich.

Die Komponente 7 wirkt mit den einzelnen Positionsschaltern 13 so zusammen, dass solche Positionsschalter 13 geöffnet werden, bei denen die zugehörigen Trittkontaktsegmente 3 bereits in das Gehäuse 8 der Trittstufe 1 eingefahren sind. Dies bedeutet, dass kontaktwiedergebende Signale von den letztgenannten Trittkontaktsegmenten 3 nicht weitergeleitet werden. Etwaige kontaktwiedergebende Signale der außerhalb des Gehäuses 8 liegenden Trittkontaktsegmente 3 werden auf einer gemeinsamen Leitung 9 zusammengefasst, die zu der außerhalb der Trittkontaktstufe 1 liegenden Ausfahrsteuer-/regeleinheit 5 führt. Die Ausfahrsteuer-/regeleinheit 5 beeinflusst wie bei der Ausführungsform nach Figur 1 den Betrieb des Antriebs 6. Alternativ zu der dargestellten vierten Ausführungsform können selbstverständlich die Einzelsignale von den Trittkontaktsegmenten 3 gesondert von der Ausfahrsteuer-/regeleinheit 5 ausgewertet und weiterverarbeitet werden.

## Patentansprüche

1. Trittstufen-Anordnung für ein Schienenfahrzeug, mit einer Trittstufe (1) und einer Ausfahrsteuer-/regeleinheit (5), wobei die Trittstufe (1) aus einem zugehörigen Gehäuse (8) ausfahrbar und mit einer Trittkontaktmatte (2) ausgestattet ist,
wobei die Trittkontaktmatte(2)mit Drucksensoren ausgestattet ist, welche bei einer Beaufschlagung mit Druck Signale aussenden, welche in die Ausfahrsteuer-/regeleinheit (5) der Trittstufe (1) eingehen,
**dadurch gekennzeichnet,**
**dass** die Trittkontaktmatte (2) in eine Mehrzahl Trittkontaktsegmente (3) aufgeteilt ist und jedes Trittkontaktsegment (3) bei Beaufschlagung mit Druck ein Signal(4) ausgibt, dass der Ausfahrsteuer-/regeleinheit (5) der Trittstufe (1) zugeleitet ist,
**dass** in Richtung einer Ausfahrbewegung der Trittstufe (1) die Trittkontaktsegmente (3) streifenförmig hintereinander angeordnet sind und entweder die Ausfahrsteuer-/regeleinheit (5) derart ausgelegt ist, dass Signale von Trittkontaktsegmenten (3), die sich innerhalb des Gehäuses (8) befinden, ignoriert werden, oder in das Gehäuse (8) eingefahrene Trittkontaktsegmente (3) von der Ausfahrsteuer-/regeleinheit (5) deaktiviert sind.

2. Trittstufen-Anordnung nach Anspruch 1,
**dadurch gekennzeichnet,**
**dass** die Trittstufe (1) eine Positionserkennung (15) umfasst, die eine Ausfahrposition der Trittstufe wiedergebende Signale an die Ausfahrsteuer-/regeleinheit (5) aussendet.

3. Trittstufen-Anordnung nach Anspruch 1,
**dadurch gekennzeichnet,**
**dass** eine Positionserkennung (15) vorgesehen ist, die außerhalb der Trittstufe (1) angeordnet ist.

4. Trittstufen-Anordnung nach Anspruch 1,
**dadurch gekennzeichnet,**
**dass** die Trittstufe (1) die Ausfahrsteuer-/regeleinheit (5) umfasst.

5. Trittstufen-Anordnung nach Anspruch 4,
**dadurch gekennzeichnet,**
**dass** das Signal von der Ausfahrsteuer-/regeleinheit (5) drahtlos an eine Zentralsteuerung übermittelbar ist.

6. Trittstufen-Anordnung nach Anspruch 4,
**dadurch gekennzeichnet,**
**dass** das Signal der Ausfahrsteuer-/regeleinheit (5) drahtgebunden an eine Zentralsteuerung übermittelbar ist.

7. Trittstufen-Anordnung nach einem der Ansprüche 1 bis 6,
**dadurch gekennzeichnet,**
**dass** sie den jeweiligen Trittkontaktsegmenten (3) zugeordnete Positionsschalter (13) aufweist, die derart ausgebildet sind, dass die Trittkontaktsegmente (3), die in das Gehäuse (8) eingefahren sind, wirkungslos schaltbar sind.

8. Trittstufen-Anordnung nach einem der Ansprüche 1 bis 7,
**dadurch gekennzeichnet,**
**dass** kontaktwiedergebende Signale von den Trittkontaktsegmenten (3) außerhalb des Gehäuses (8) zu einem Gesamtsignal zusammengefasst und der Ausfahrsteuer-/regeleinheit (5) zugeleitet sind.

9. Trittstufen-Anordnung nach einem der Ansprüche 1 bis 7,
**dadurch gekennzeichnet,**
**dass** kontaktwiedergebende Signale von den Trittkontaktsegmenten (3) außerhalb des Gehäuses (8) der Ausfahrsteuer-/regeleinheit (5) einzeln zugeleitet und dort ausgewertet sind.

## Claims

1. Step arrangement for a rail vehicle, having a step (1) and an extension open-loop/closed-loop control unit (5) with the step (1) being extendable from an associated housing (8) and being equipped with a step contact mat (2),
with the step contact mat (2) being equipped with pressure sensors which transport signals when pressure is applied, which signals arrive at the extension open-loop/closed-loop control unit (5) for the step (1) **characterized in that** the step contact mat (2) is subdivided into a plurality of step-contact segments (3), and each step contact segment (3) emits a signal (4) when pressure is applied, which signal (4) is supplied to the extension open-loop/closed-loop control unit (5) for the step (1),
**in that** the step contact segments (3) are arranged one behind the other in the form of strips in the direction of an extension movement of the step (1), and the extension open-loop/closed-loop control unit (5) is either designed such that signals from step contact segments (3) which are located within the housing (8) are ignored, or step contact segments (3) which have been retracted into the housing (8) are deactivated by the extension open-loop/closed-loop control unit (5).

2. Step arrangement according to Claim 1, **characterized in that** the step (1) has a position identification (15) which transmits signals, which reflect an extension position of the step, to the extension open-loop/closed-loop control unit (5).

3. Step arrangement according to Claim 1, **characterized in that** a position identification (15) is provided, and is arranged outside the step (1).

4. Step arrangement according to Claim 1, **characterized in that** the step (1) comprises the extension open-loop/closed-loop control unit (5).

5. Step arrangement according to Claim 4, **characterized in that** the signal can be transmitted from the extension open-loop/closed-loop control unit (5) in a wire-free manner to a central control.

6. Step arrangement according to Claim 4, **characterized in that** the signal from the extension open-loop/closed-loop control unit (5) can be transmitted by wire to a central control.

7. Step arrangement according to one of Claims 1 to 6, **characterized in that** said step arrangement has position switches (13) which are associated with the respective step contact segments (3) and are designed such that the step contact segments (3) which have been retracted into the housing (8) can be switched to be ineffective.

8. Step arrangement according to one of Claims 1 to 7, **characterized in that** contact-reproduction signals from the step contact segments (3) outside the housing (8) are combined to form one overall signal and are passed to the extension open-loop/closed-loop control unit (5).

9. Step arrangement according to one of Claims 1 to 7, **characterized in that** the contact-reproduction signals from the step contact segments (3) outside the housing (8) are passed individually to the extension open-loop/closed-loop control unit (5) and are evaluated there.

## Revendications

1. Dispositif de marche pour un véhicule ferroviaire, comprenant une marche ( 1 ) et une unité ( 5 ) de commande/réglage du déploiement, la marche ( 1 ) pouvant être déployée d'une boîte ( 8 ) associée et étant équipée d'un paillasson ( 2 ) de contact,
dans lequel le paillasson ( 2 ) de contact est équipé de capteurs de pression, qui, lorsqu'une pression leur est appliquée, émettent des signaux, lesquels entrent dans l'unité ( 5 ) de commande/réglage du déploiement de la marche ( 1 ), **caractérisé**
**en ce que** le paillasson ( 2 ) de contact est subdivisé en une multiplicité de segments ( 3 ) de contact et chaque segment ( 3 ) de contact émet, lorsqu'une pression lui est appliquée, un signal ( 4 ), qui est envoyé à l'unité ( 5 ) de commande/réglage du déploiement de la marche ( 1 ),
**en ce que**, dans la direction d'un mouvement de déploiement de la marche ( 1 ), les segments ( 3 ) de contact sont disposés les uns derrière les autres sous la forme de bandes et ou bien l'unité ( 5 ) de commande/réglage du déploiement est conçue de manière à ne pas tenir compte des signaux de segments ( 3 ) de contact qui se trouvent dans la boîte ( 8 ), ou bien des segments ( 3 ) de contact rentrés dans la boîte ( 8 ) sont désactivés par l'unité ( 5 ) de commande/réglage du déploiement.

2. Dispositif de marche suivant la revendication 1,
**caractérisé**
**en ce que** la marche ( 1 ) comprend une reconnaissance ( 15 ) de position, qui émet, vers l'unité ( 5 ) de commande/réglage du déploiement, des signaux reproduisant une position de déploiement de la marche.

3. Dispositif de marche suivant la revendication 1,
**caractérisé**
**en ce qu'**il est prévu une reconnaissance ( 15 ) de position, qui est disposée à l'extérieur de la marche ( 1 ).

4. Dispositif de marche suivant la revendication 1,
**caractérisé**
**en ce que** la marche ( 1 ) englobe l'unité ( 5 ) de commande/réglage du déploiement.

5. Dispositif de marche suivant la revendication 4,
**caractérisé**
**en ce que** le signal peut être transmis sans fil à une commande centrale par l'unité ( 5 ) de commande/réglage du déploiement.

6. Dispositif de marche suivant la revendication 4,
**caractérisé**
**en ce que** le signal de l'unité ( 5 ) de commande/réglage du déploiement peut être transmis par fil à une commande centrale.

7. Dispositif de marche suivant l'une des revendications 1 à 4,
**caractérisé**
**en ce qu'**il comporte des commutateurs ( 13 ) de position, qui sont associés aux segments ( 3 ) de contact respectifs et qui sont constitués de manière à ce que les segments ( 3 ) de contact, qui sont rentrés dans la boîte ( 8 ), puissent être connectés sans effet.

8. Dispositif de marche suivant l'une des revendications 1 à 7,
**caractérisé**
**en ce que** des signaux reproduisant un contact sont rassemblés par les segments ( 3 ) de contact à l'extérieur de la boîte ( 8 ) en un signal global et envoyés à l'unité ( 5 ) de commande/réglage du déploiement.

9. Dispositif de marche suivant l'une des revendications 1 à 7,
**caractérisé**
**en ce que** des signaux reproduisant un contact sont envoyés individuellement par les segments ( 3 ) de contact à l'extérieur de la boîte ( 8 ) à l'unité ( 5 ) de commande/réglage du déploiement et y sont exploités.
